# EUROPÄISCHE PATENTSCHRIFT

(11) **EP 2 537 200 B1**
(45) Veröffentlichungstag und Bekanntmachung des Hinweises auf die Patenterteilung: **02.09.2015**
(21) Anmeldenummer: 10787324.2
(22) Anmeldetag: 04.12.2010
(51) Int. Cl.: H01M 8/04

(54) **BRENNSTOFFZELLENSYSTEM MIT WENIGSTENS EINER BRENNSTOFFZELLE**
FUEL CELL SYSTEM HAVING AT LEAST ONE FUEL CELL
SYSTÈME DE PILES À COMBUSTIBLE, COMPRENANT AU MOINS UNE PILE À COMBUSTIBLE

(30) Priorität: 17.02.2010 DE 102010008205
(43) Veröffentlichungstag der Anmeldung: 26.12.2012
(73) Patentinhaber: Daimler AG, 70327 Stuttgart (DE)
(72) Erfinder: STEINHAUSER, Benjamin, 88410 Bad Wurzach-Arnach (DE); KONRAD, Gerhard, 89081 Ulm (DE)
(74) Vertreter: JENSEN & SON
(86) Internationale Anmeldenummer: PCT/EP2010/007378
(87) Internationale Veröffentlichungsnummer: WO 2011/101009

(56) Entgegenhaltungen:
- DE-A1- 10 142 578
- US-A1- 2004 038 095
- US-A1- 2004 229 096
- US-A1- 2008 220 295

## Beschreibung

Die Erfindung betrifft ein Brennstoffzellensystem mit wenigstens einer Brennstoffzelle nach der im Oberbegriff von Anspruch 1 näher definierten Art. Außerdem betrifft die Erfindung die Verwendung eines solchen Brennstoffzellensystems.

Brennstoffzellensysteme an sich sind aus dem allgemeinen Stand der Technik bekannt. Der Brennstoffzelle wird dabei häufig über eine Luftfördereinrichtung ein Prozessluftstrom zur Verfügung gestellt, welcher einen Kathodenbereich der Brennstoffzelle zur Versorgung derselben mit Luftsauerstoff durchströmt. Die zu der Brennstoffzelle geförderte Luft wird durch die Luftfördereinrichtung, beispielsweise einen Strömungsverdichter, einen Schraubenverdichter, ein Roots-Gebläse oder Ähnlichem verdichtet und dabei entsprechend erwärmt. Beim Einsatz einer PEM-Brennstoffzelle in dem Brennstoffzellensystem kann diese Erwärmung der Prozessluft zu einer schnellen Austrocknung der relativ empfindlichen Membranen in der Brennstoffzelle beitragen. Daher ist in derartigen Brennstoffzellensystemen häufig ein Wärmetauscher als Ladeluftkühler vorgesehen, welcher von der Prozessluft nach der Luftfördereinrichtung auf der einen Seite und von einem Kühlmedium, beispielsweise der vergleichsweise kühlen Abluft aus dem Bereich der Brennstoffzelle, andererseits durchströmt wird, um die zu der Brennstoffzelle strömende Prozessluft nach der Luftfördereinrichtung abzukühlen und so die Lebensdauer und Leistungsfähigkeit der Brennstoffzelle zu steigern.

Aus dem allgemeinen Stand der Technik ist es außerdem bekannt, dass für Brennstoffzellensysteme, und hier insbesondere für Brennstoffzellensysteme, welche in Fahrzeugen eingesetzt werden, die Kaltstartfähigkeit eine entscheidende Rolle spielt. Um die Brennstoffzellensysteme auch bei Temperaturen unterhalb des Gefrierpunkts sicher, zuverlässig und insbesondere sehr schnell starten zu können, wird ein erheblicher 10 2008 047 871 A1 bekannt, über verschiedene Wärmequellen in einem Kühlkreislauf eines Brennstoffzellenstapels dessen schnelle Aufheizung zu bewirken. Sollten all diese Maßnahmen nicht ausreichen, so schlägt die genannte Offenlegungsschrift vor, Wasserstoff auf die Kathodenseite des Stapels zu leiten und diesen zusammen mit der Prozessluft im Bereich der in der Brennstoffzelle vorhandenen Elektrokatalysatoren zu verbrennen. Damit lässt sich eine vergleichsweise hohe Wärmemenge im Bereich der Brennstoffzelle selbst erzeugen.

Diese Maßnahme mit der Einleitung einer vergleichsweise großen Menge an Wasserstoff in den Kathodenbereich der Brennstoffzelle hat den gravierenden Nachteil, dass durch die Zufuhr des Wasserstoffs in den Kathodenbereich der dort vorhandene Katalysator zur Verbrennung, also zur thermischen Umsetzung des Wasserstoffs mit dem Sauerstoff der Prozessluft genutzt wird. Dies hat eine vergleichsweise hohe punktuelle Wärmeentwicklung zur Folge, welche die Lebensdauer der Brennstoffzelle massiv beeinträchtigt.

Aus der US 2008/0220295 A1 ist ein Brennstoffzellensystem bekannt, bei dem über einen katalytischen Brenner Wasserstoff und Sauerstoff in Strömungsrichtung vor einem Kathodenraum der Brennstoffzelle verbrannt werden. Über einen Wärmetauscher im Bereich des katalytischen Brenners wird dabei Wärme an ein Kühlmedium in einem Kühlkreislauf des Brennstoffzellensystems abgegeben.

Aus dem weiteren Stand der Technik sind aus der Thematik der Hochtemperatur-Brennstoffzellen bzw. Festoxidbrennstoffzellen die Schriften DE 101 42 578 A1 und US 2004/0028095 A1 bekannt. In diesen Schriften ist die Erwärmung der der Brennstoffzelle zugeführten Edukte, was bei einer Hochtemperatur-Brennstoffzelle zwingend notwendig ist, durch eine entsprechende Vorwärmung beispielsweise im Bereich von Reformern bzw. Einheiten zur partiellen Oxidation beschrieben.

Es ist daher die Aufgabe der hier vorliegenden Erfindung, ein Brennstoffzellensystem anzugeben, welches eine sehr schnelle Erwärmung des Brennstoffzellensystems gewährleistet, ohne die oben genannten Nachteile hinsichtlich der Lebensdauer der Brennstoffzelle in Kauf nehmen zu müssen.

Erfindungsgemäß wird diese Aufgabe durch die im kennzeichnenden Teil von Anspruch 1 genannten Merkmale gelöst. Eine besonders günstige Verwendung für ein derartiges Brennstoffzellensystem ist im Anspruch 9 angegeben. Vorteilhafte Weiterbildungen ergeben sich aus den jeweils abhängigen Unteransprüchen.

Erfindungsgemäß wird ein Brennstoffzellensystem mit einem Wärmetauscher verwendet, welcher als Ladeluftkühler zum Abkühlen der von der Luftfördereinrichtung verdichteten und dabei erwärmten Prozessluft eingesetzt wird. Gemäß der Erfindung ist dabei vor oder in dem Bereich des Wärmetauschers, welcher von dem Prozessluftstrom durchströmt ist, ein Bereich mit einem katalytisch aktiven Material angeordnet. Außerdem wird dem Bereich mit dem katalytisch aktiven Material bei Bedarf Brennstoff zugeführt. Dadurch ergibt sich die Möglichkeit, dass die zu der Brennstoffzelle geleitete Prozessluft nicht nur, wie im herkömmlichen Betrieb, abgekühlt werden kann, sondern dass diese bei Bedarf, und hier insbesondere im Kaltstartfall, durch die Zugabe von Brennstoff in den Bereich mit dem katalytisch aktiven Material durch eine katalytische Umsetzung von Sauerstoff und Brennstoff entsprechend erwärmt und bei wasserstoffhaltigem Brennstoff durch das entstehende Produktwasser befeuchtet werden kann. Damit ergibt sich eine sehr einfache und effiziente Möglichkeit, durch die Zufuhr von Brennstoff eine Erwärmung der Prozessluft und damit der Brennstoffzelle und des Brennstoffzellensystems zu realisieren. Durch den vor oder im Bereich des Wärmetauschers angeordneten speziell hierfür konzipierten Katalysator entsteht die Wärme nicht im Bereich der Brennstoffzelle selbst, sondern außerhalb derselben. Sie wird dann vom Prozessluftstrom in den Bereich der Brennstoffzelle eingetragen. Nachteile hinsichtlich der Lebensdauer der Brennstoffzelle, wie sie bei den Aufbauten aus dem Stand der Technik bekannt und üblich sind, können dadurch verhindert werden, da im Bereich der Brennstoffzelle selbst kein Brennstoff im Kathodenbereich derselben anlangt und entsprechend umgesetzt werden muss. Das Brennstoffzellensystem selbst kann so sehr schnell auf Betriebstemperatur gebracht werden, insbesondere hinsichtlich aller im Bereich der Luftversorgung angeordneten Bauteile.

In dem erfindungsgemäßen Brennstoffzellensystem ist es vorgesehen, dass der Kühlmedienstrom ein Abluftstrom aus einem Kathodenbereich der Brennstoffzelle ist.

Dieser Aufbau nutzt die vergleichsweise kühle Abluft aus dem Kathodenbereich der Brennstoffzelle im regulären Betrieb zur Kühlung der nach der Luftfördereinrichtung erhitzten Prozessluft für die Brennstoffzelle. Da unter entsprechend kalten Startbedingungen die Verdichtung der Prozessluft nicht ausreicht um diese ausreichend stark zu erwärmen, um so ein Auskondensieren von Flüssigkeit und/oder ein Einfrieren dieser Flüssigkeit zu verhindern, ist erfindungsgemäß der Bereich mit dem katalytisch aktiven Material vor oder im Bereich des Wärmetauschers vorgesehen, um den Prozessluftstrom zur Brennstoffzelle durch die Zugabe eines Brennstoffs zu erwärmen. Diese Wärme kommt nun auch dem Abluftstrom, welcher in einer solchen Betriebssituation ebenfalls noch vergleichsweise kalt ist, zugute. So kann der Abluftstrom entsprechend erwärmt werden und ein Einfrieren der Abluftleitung oder beispielsweise einer im Abluftstrom angeordneten Turbine durch auskondensierende und gefrierende Tröpfchen kann verhindert werden. Der Eintrag von Wärme während des Kaltstarts des Brennstoffzellensystems durch das katalytisch aktive Material im Bereich des Wärmetauschers dient also auch dazu, die Betriebsfähigkeit des Brennstoffzellensystems auf der Abluftseite in idealer Weise zu gewährleisten.

In einer vorteilhaften Ausgestaltung des erfindungsgemäßen Brennstoffzellensystems ist es nun vorgesehen, dass der Bereich mit dem katalytisch aktiven Material in den Wärmetauscher integriert ausgebildet ist. Diese Integration des katalytisch aktiven Materials auf die vom Prozessluftstrom durchströmte Seite des Wärmetauschers ermöglicht dabei einen sehr kompakten Aufbau, da die Komponente des Wärmetauschers sowohl als Ladeluftkühler als auch - bei Bedarf - zur katalytischen Umsetzung von Stoffen auf seiner vom Prozessluftstrom durchströmten Seite dient.

In einer bevorzugten Weiterbildung des erfindungsgemäßen Brennstoffzellensystems ist es vorgesehen, dass der Wärmetauscher im Bereich, in dem er von dem Prozessluftstrom durchströmt ist, ganz oder teilweise mit dem katalytisch aktiven Material beschichtet ist. Eine solche Beschichtung des Wärmetauschers mit dem katalytisch aktiven Material ist vergleichsweise einfach möglich. Damit kann mit minimalem Einsatz an katalytisch aktivem Material, beispielsweise Platin oder Palladium, ein entsprechend wirksamer katalytischer Umsatz von Luft und Brennstoff erzielt werden. Anders als bei ebenso denkbaren Schüttungen von mit katalytisch aktivem Material versehenen Pellets oder dergleichen ist der Eintrag von Verunreinigungen in den Bereich der Brennstoffzelle annähernd ausgeschlossen, sodass auf Filterelemente und dergleichen, welche einen unnötigen Druckverlust verursachen würden, verzichtet werden kann.

Das Brennstoffzellensystem gemäß der Erfindung hat nun den Vorteil, dass es sehr kompakt und einfach baut und ein Brennstoffzellensystem bereitstellt, welches sehr einfach und effizient auch bei sehr niedrigen Umgebungstemperaturen gestartet werden kann. Die bevorzugte Verwendung eines derartigen Brennstoffzellensystems liegt daher im Einsatz zur Bereitstellung von elektrischer Leistung in einem Transportmittel, welches zusammen mit dem Brennstoffzellensystem ein bewegliches System bildet. Insbesondere in einem derartigen beweglichen System kann es sehr häufig zu einem Start aus widrigen Bedingungen, insbesondere aus Temperaturen unterhalb des Gefrierpunkts heraus kommen. Speziell in derartigen Systemen ist dabei ein schnelles Starten des Systems unerlässlich, da beispielsweise beim Einsatz in einem Kraftfahrzeug als Transportmittel ein solches vom Benutzer desselben erwartet wird, da bei Kraftfahrzeugen mit herkömmlichen Antriebssystemen ein vergleichbares Verhalten vorliegt und ein solches bekannt und üblich ist. Das erfindungsgemäße Brennstoffzellensystem kann seine Vorteile also insbesondere in einem derartigen Aufbau voll ausspielen.

Weitere vorteilhafte Ausgestaltungen der erfindungsgemäßen Vorrichtung ergeben sich aus den restlichen abhängigen Ansprüchen und werden anhand des Ausführungsbeispiels deutlich, welches nachfolgend unter Bezugnahme auf die Figuren näher erläutert wird.

Dabei zeigen:
- Fig. 1: eine erste mögliche Ausführungsform eines Brennstoffzellensystems gemäß der Erfindung;
- Fig. 2: eine weitere mögliche Ausführungsform eines Brennstoffzellensystems gemäß der Erfindung; und
- Fig. 3: eine weitere alternative Ausführungsform eines Brennstoffzellensystems gemäß der Erfindung.

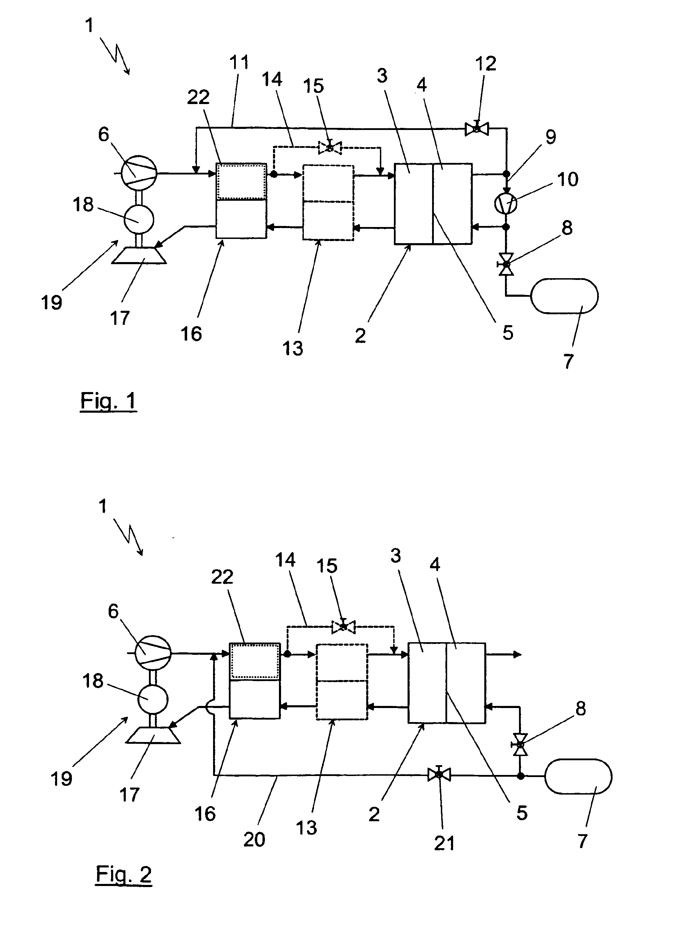

In der Darstellung der Figur 1 ist ein Brennstoffzellensystem 1 zu erkennen. Den Kern des Brennstoffzellensystems 1 bildet eine Brennstoffzelle 2, welche beispielsweise als Stapel von PEM-Brennstoffzellen aufgebaut ist. Dabei wird ein Kathodenraum 3 und ein Anodenraum 4 der Brennstoffzelle 2 durch protonenleitende Membranen 5 voneinander getrennt. Als Oxidationsmittel zum Betrieb der Brennstoffzelle 2 dient typischerweise der Sauerstoff in der Luft, wozu Luft über eine Luftfördereinrichtung 6 in den Kathodenraum 3 gefördert wird. Dem Anodenraum 4 wird Wasserstoff oder ein wasserstoffhaltiges Gas zugeführt. In dem hier dargestellten Ausführungsbeispiel soll dem Anodenraum 4 der Brennstoffzelle 2 Wasserstoff aus einem Druckgasspeicher 7 zugeführt werden. Der in diesem Druckgasspeicher 7 unter einem hohen Druck gespeicherte Wasserstoff wird über eine Ventileinrichtung 8 dem Anodenraum 4 zugeführt und dabei auf ein Druckniveau entspannt, welches für den Betrieb der Brennstoffzelle 2 geeignet ist. Beim Einsatz von reinem Wasserstoff als Brennstoff für die Brennstoffzelle 2 wird dieser dem Anodenraum 4 typischerweise mit einem höheren Volumenstrom zur Verfügung gestellt, als in dem Anodenraum 4 der Brennstoffzelle 2 umgesetzt werden kann. Dies dient einer möglichst gleichmäßigen Versorgung der gesamten zur Verfügung stehenden aktiven Fläche der protonenleitenden Membranen 5 mit einer ausreichenden Menge an Wasserstoff. Der unverbrauchte Wasserstoff wird dann aus dem Anodenraum 4 über eine Rezirkulationsleitung 9 abgeführt und mittels einer Rezirkulationsfördereinrichtung 10, beispielsweise einem Wasserstoffrezirkulationsgebläse und/oder einer Gasstrahlpumpe oder dergleichen, zusammen mit frischem Wasserstoff aus dem Druckgasspeicher 7 wieder dem Anodenbereich 4 zugeführt. Mit der Zeit reichert sich im Bereich der Rezirkulationsleitung 9 Stickstoff an, welcher durch die Membranen 5 hindurch in den Anodenraum 4 gelangt ist, ebenso eine geringe Menge an Produktwasser, welche im Anodenraum 4 der Brennstoffzelle 2 entsteht. Da diese inerten Stoffe in der Brennstoffzelle nicht umgesetzt werden können, verringern diese die Wasserstoffkonzentration in dem Volumen der Rezirkulationsleitung 9 und des Anodenraums 4 mit der Zeit. Von Zeit zu Zeit werden daher die im Bereich der Rezirkulationsleitung 9 befindlichen Stoffe über eine Ablassleitung 11 und eine darin angeordnete Ventileinrichtung 12 abgelassen, um die Wasserstoffkonzentration im Anodenraum 4 aufrechterhalten zu können. Über die Ablassleitung 11 gelangt dabei immer auch eine gewisse Menge an Restwasserstoff aus dem System. Daher ist es allgemein bekannt und üblich, die Ablassleitung 11 in den Bereich des Prozessluftstroms zu führen, um so eventuellen Restwasserstoff im Kathodenbereich 3 der Brennstoffzelle 2 umzusetzen und Wasserstoffemissionen zu verhindern. Durch die außerordentlich geringe Menge an Restwasserstoff, welche beim Ablassen (dem sogenannten Purgen) von Zeit zu Zeit auftritt, sind eventuelle Nachteile hinsichtlich der Lebensdauer der Brennstoffzelle 2 kaum zu befürchten.

Die Membranen 5 der Brennstoffzelle 3 sind vergleichsweise empfindlich gegen eine Austrocknung. Da der über die Luftfördereinrichtung 6 geförderte Volumenstrom an Luft typischerweise trocken ist, kann ein entsprechend hoher Luftvolumenstrom die Austrocknung der Membranen 5 beschleunigen. Daher kann in dem Brennstoffzellensystem 1 ein Befeuchter 13 vorgesehen sein, welcher beispielsweise als Gas-Gas-Befeuchter ausgebildet ist. Der Kern eines solchen Befeuchters 13 sind für Wasserdampf durchlässige Membranen. Auf der einen Seite der Membranen strömt der trockene von der Luftfördereinrichtung 6 geförderte Gasstrom. Auf der anderen Seite der Membranen strömt der Abgasstrom aus dem Kathodenraum 3 der Brennstoffzelle 2. Da der größte Teil des Produktwassers im Kathodenraum 3 der Brennstoffzelle 2 entsteht, ist dieser Abgasstrom entsprechend mit Flüssigkeit in Form von Wasserdampf und Tröpfchen beladen. Der Wasserdampf kann durch die Membranen hindurch in dem Befeuchter 13 die trockene Zuluft befeuchten, sodass einerseits die Abluft entfeuchtet und andererseits durch die befeuchtete Zuluft eine Befeuchtung der Membranen 5 der Brennstoffzelle 2 sichergestellt werden kann. Da nicht in allen Situationen die volle Befeuchtung gewünscht ist, kann außerdem um den Befeuchter 13, hier beispielhaft im Bereich der Zuluftleitung zum Kathodenraum 3, prinzipiell ist dies aber auch analog im Bereich der Abluftleitung vom Kathodenraum 3 möglich, ein Bypass 14 angeordnet sein. Dieser kann über eine Ventileinrichtung 15 so gesteuert werden, dass der durch den Befeuchter 13 strömende zu befeuchtende Volumenstrom entsprechend aufgeteilt wird. Damit kann eine einstellbare Feuchte im Bereich des Kathodenraums 3 erzielt werden.

Der Aufbau des Brennstoffzellensystems 1 in Figur 1 zeigt außerdem einen Wärmetauscher 16 als Ladeluftkühler, welcher ebenfalls von der Zuluft nach der Luftfördereinrichtung 6 einerseits und der Abluft aus dem Kathodenraum 3 andererseits durchströmt wird. Nach der Luftfördereinrichtung 6 wird die geförderte Luft entsprechend heiß sein, da diese sich bei der Verdichtung entsprechend erhitzt. Die Abluft aus dem Kathodenraum 3 ist dagegen kühler. Durch den Ladeluftkühler 16 kommt es nun zu einem Wärmeaustausch zwischen diesen beiden Gasströmen, sodass die zu dem Kathodenraum 3 geförderte Luft abgekühlt in die von dem Kathodenraum 3 abströmende Luft erwärmt wird. Durch die abgekühlte Luft nach der Luftfördereinrichtung 6 wird die Gefahr eines Austrocknens der Membranen 5 der Brennstoffzelle weiter verringert.

Die erwärmte Abluft aus dem Ladeluftkühler 16 strömt dann in den Bereich einer Turbine 17 und wird im Bereich dieser Turbine 17 entspannt und abgekühlt. Dadurch lässt sich über die Turbine 17 mechanische Energie aus dem Abgasstrom des Brennstoffzellensystems 1 zurückgewinnen. Über die Turbine 17 kann in dem hier dargestellten Ausführungsbeispiel unmittelbar die Luftfördereinrichtung 6 mit mechanischer Energie versorgt werden. Außerdem kann eine elektrische Maschine 18 vorgesehen sein, welche bei entsprechendem Energieüberschuss im Bereich der Turbine 17 generatorisch betrieben werden kann, um zusätzlich elektrische Energie aus dem Abgasstrom zurückzugewinnen. Wird durch die Luftfördereinrichtung 6 mehr Energie benötigt als durch die Turbine 17 bereitgestellt werden kann, dann kann die elektrische Maschine 18 auch motorisch betrieben werden. In diesem Fall würde sie die benötigte Energiedifferenz zur Förderung des Luftstroms über die Luftfördereinrichtung 6 bereitstellen. Dieser Aufbau aus Turbine 17, elektrischer Maschine 18 und Luftfördereinrichtung 6, welche bei diesem Aufbau typischerweise als Strömungsverdichter ausgebildet ist, wird im Allgemeinen auch als elektrischer Turbolader 19 oder ETC (Electric Turbo Charger) 19 bezeichnet.

Ergänzend kann zur Verbesserung des Betriebs der Turbine 17 ein optionaler Brenner, beispielsweise ein katalytischer Brenner, ein Porenbrenner, ein Matrixbrenner oder dergleichen in dem Abluftstrom nach dem Ladeluftkühler 16 vorgesehen sein, über welchen Abgase der Brennstoffzelle 2 und gegebenenfalls optionaler Brennstoff umgesetzt werden können. Dadurch kann der für die Turbine 17 bereitgestellte Abgasstrom erhitzt werden, um so über die Turbine 17 mehr Leistung generieren zu können.

In der Darstellung der Figur 2 ist nun ein vergleichbarer Systemaufbau zu erkennen, welcher so alternativ zu dem oben dargestellten Brennstoffzellensystem 1 eingesetzt werden könnte. Der Aufbau unterscheidet sich im Wesentlichen dadurch, dass keine Rezirkulationsleitung 9 um den Anodenraum 4 der Brennstoffzelle 2 existiert. Bei diesem Aufbau wird der Anodenraum 4 also nur mit keinem oder nur einem geringen Überschuss an Wasserstoff versorgt, welcher anderweitig umgesetzt wird, beispielsweise in dem oben genannten optionalen Brenner nachverbrannt wird. In der Darstellung der Figur 2 ist außerdem eine Wasserstoffleitung 20 mit einer Ventileinrichtung 21 zu erkennen, auf deren Funktionalität später noch näher eingegangen wird.

Der Betrieb eines Brennstoffzellensystems 1, wie es in einer der Figuren 1 oder 2 dargestellt ist, ist nun der normale Betriebsfall typischerweise der, dass über die Luftfördereinrichtung 6 Prozessluft zu dem Kathodenraum der Brennstoffzelle 2 gefördert wird, während aus dem Druckgasspeicher 7 Wasserstoff in den Anodenraum 4 der Brennstoffzelle 2 gelangt. In der Brennstoffzelle 2 entstehen dann elektrische Energie und Produktwasser, welches über die entsprechenden Abgasströme aus dem System geführt wird. Problemtisch ist der Betrieb derartiger Brennstoffzellensysteme 1 nun immer dann, wenn extrem geringe Umgebungstemperaturen vorliegen. Insbesondere beim Starten eines solchen Brennstoffzellensystems 1, also wenn dieses selbst noch auf einer sehr geringen Temperatur ist, ist dies ein entscheidendes Problem, da durch eingefrorene Bauteile und/oder auskondensierende Feuchtigkeit, welche dann wieder eingefrieren kann, die Funktionalität des Brennstoffzellensystems 1 beeinträchtigt wird. Die beiden Brennstoffzellensysteme 1 in den Darstellungen der Figuren 1 und 2 weisen nun im Bereich des Wärmetauschers 16 ein katalytisch aktives Material, beispielsweise auf der Basis von Platin und/oder Palladium, auf. Dieses katalytisch aktive Material ist in den Darstellungen der Figuren 1 und 2 durch eine punktiert angedeutete Beschichtung 22 des Teils des Wärmetauschers 16 dargestellt, welcher von dem Prozessluftstrom zu der Brennstoffzelle 2 durchströmt ist. Über die Ablassleitung 11 und die Ventileinrichtung 12 im Falle des Aufbaus gemäß Figur 1 oder über die Wasserstoffleitung 20 und die Ventileinrichtung 21 im Falle des Aufbaus gemäß Figur 2 kann dem Prozessluftstrom nach der Luftfördereinrichtung 6 nun Brennstoff zugeführt werden. Im Falle des Aufbaus gemäß Figur 2 kann der Brennstoff direkt aus dem Druckgasspeicher 7 über die Ventileinrichtung 21 und die Wasserstoffleitung 20 in den Bereich des Prozessluftstroms strömen. Im Falle des Aufbaus des Brennstoffzellensystems 1 in der in Figur 1 dargestellten Art kann eine Strömung über die ohnehin vorhandene Ablassleitung 11 und die darin befindliche Ventileinrichtung 12 realisiert werden, indem während des Kaltstarts einfach die Ventileinrichtung 12 geöffnet bleibt. Sobald der Anodenraum 4 mit Wasserstoff versorgt ist, kommt es so zu einer Strömung des Wasserstoffs in dem Bereich der Prozessluft. Prinzipiell wäre es in beiden Ausgestaltungen des Brennstoffzellensystems 1 auch denkbar, den Brennstoff direkt in den Bereich des Wärmetauschers 16 einzubringen und nicht in den Bereich des in ihn einströmenden Prozessluftstroms.

In beiden Fällen kommt es nun im Bereich des katalytisch aktiven Materials 22 zu einer Umsetzung des Sauerstoffs in dem Prozessluftstrom und des über die Ablassleitung 11 oder die Wasserstoffleitung 20 zugeführten Brennstoffs. Diese Umsetzung von Sauerstoff und dem hier dargestellten Fall Wasserstoff als Brennstoff im Bereich des katalytisch aktiven Materials 22 sorgt für eine Erwärmung des Wärmetauschers 16 und der durch ihn strömenden Prozessluft. Durch diese Erwärmung kann eine sehr schnelle Erwärmung der Brennstoffzelle 2 des Brennstoffzellensystems 1 realisiert werden, ohne dass der im Bereich der Brennstoffzelle 2 befindliche Katalysator zum Umsetzen der Ausgangsstoffe genutzt wird. Die Wärme wird dadurch über den Prozessluftstrom vergleichsweise verträglich und gleichmäßig eingetragen. Die eingangs geschilderten Nachteile hinsichtlich der Lebensdauer lassen sich so vermeiden.

Die Erwärmung des Wärmetauschers 16, welcher auf seiner anderen Seite durch den Abluftstrom aus dem Kathodenbereich 3 der Brennstoffzelle 2 gekühlt ist, erwärmt nicht nur den Prozessluftstrom zur Brennstoffzelle 2, sondern auch den Abluftstrom aus der Brennstoffzelle 2. Damit wird ein Auskondensieren von Produktwasser in dem Abluftstrom aus der Brennstoffzelle weitgehend vermieden. Dadurch kann es nicht zu gefrierenden Tröpfchen von Flüssigkeit im Bereich des Abluftstroms kommen. Derartige Eispartikel wären sehr nachteilig und gefährlich für die Turbine 17, da diese bei einer schnelllaufenden Turbine 17 das Turbinenrad beschädigen könnten.

Ein weiterer Vorteil des in dem Ladeluftkühler 16 angeordneten katalytisch aktiven Materials 22 liegt bei dem Aufbau des Brennstoffzellensystems 1 gemäß Figur 1 darin, dass auch im regulären Betrieb der über die Ablassleitung 11 von Zeit zu Zeit abgelassene Stoffstrom in den Bereich dieses katalytisch aktiven Materials 22 gelangt. In dem Stoffstrom typischerweise vorhandene Restmengen an Wasserstoff können so in dem Ladeluftkühler 16 umgesetzt werden und belasten damit den Kathodenbereich 3 der Brennstoffzelle 2 nicht. Auch wenn derzeit nicht davon ausgegangen werden muss, dass derart geringe Mengen an Wasserstoff die Lebensdauer der Brennstoffzelle 2 nachteilig beeinträchtigen könnten, so stellt dieser zusätzliche Nutzen des mit dem katalytisch aktiven Material 22 versehenen Ladeluftkühlers 16 dennoch einen Vorteil bei der Anwendung des Brennstoffzellensystems 1 dar, da so in jedem Fall die Zufuhr von Wasserstoff in den Kathodenbereich 3 verhindert werden kann.

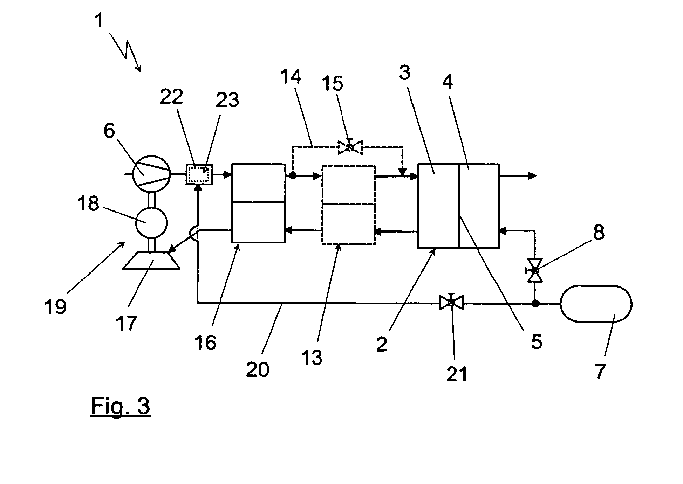

In Figur 3 ist eine alternative Ausführungsform des Brennstoffzellensystems 1 dargestellt. Dieses funktioniert im Wesentlichen wie das im Rahmen der Figur 2 beschriebene Brennstoffzellensystem 1. Lediglich das katalytisch aktive Material 22 ist im hier vorliegenden Ausführungsbeispiel in eine eigene Komponente, beispielsweise einen katalytischen Brenner 23, integriert, welche in Strömungsrichtung des Prozessluftstroms vor dem Wärmetauscher 16 angeordnet ist. Die Funktionalität ist im Wesentlichen dieselbe, da die in dem katalytischen Brenner 23 bei Bedarf erwärmte Prozessluft die Prozessluftseite des Wärmetauschers 16 nach dem katalytischen Brenner 23 durchströmt und dort vergleichbare Wirkungen entfaltet, wie bei der alternativen Ausgestaltung mit in den Wärmetauscher 16 integriertem katalytisch aktiven Material 22.

Alles in allem lässt sich so ein sehr kompakter und sehr zuverlässiger Aufbau für ein Brennstoffzellensystem 1 realisieren, welches, ohne die Lebensdauer der Brennstoffzelle 2 zu gefährden, einen sehr schnellen Start des Brennstoffzellensystems 1 ermöglicht. Das Brennstoffzellensystem 1 ist daher prädestiniert, um in Transportmitteln zur Erzeugung von elektrischer Leistung eingesetzt zu werden. Als Transportmittel kommen dabei verschiedene Transportmittel auf dem Wasser, in der Luft oder auf dem Land in Frage, insbesondere zum Transport von Personen und Gütern im Nahverkehrs-, Fernverkehrs- oder Logistikbereich. Die besonders bevorzugte Anwendung liegt dabei sicherlich im Bereich von Fahrzeugen, insbesondere im Bereich von schienenlosen Landfahrzeugen, in welchen das Brennstoffzellensystem zur Bereitstellung von elektrischer Leistung beispielsweise für Hilfsaggregate und Nebenaggregate und/oder für einen elektrischen Antrieb des Fahrzeugs ausgebildet ist.

## Patentansprüche

1. Brennstoffzellensystem (1) mit wenigstens einer Brennstoffzelle (2), mit wenigstens einer Luftfördereinrichtung (6), welche einen Prozessluftstrom zu der Brennstoffzelle (2) fördert, mit wenigstens einem Wärmetauscher (16), welcher auf der einen Seite von dem Prozessluftstrom nach der Luftfördereinrichtung (6) und auf der anderen Seite von einem Kühlmedienstrom durchströmt ist, wobei in Strömungsrichtung des Prozessluftstroms vor oder im Bereich des Wärmetauschers (16) ein Bereich mit katalytisch aktivem Material (22) angeordnet ist, wobei dem Bereich mit dem katalytisch aktiven Material (22) ein Brennstoff zuführbar ist,
**dadurch gekennzeichnet, dass**
der Kühlmedienstrom ein Abluftstrom aus einem Kathodenbereich (3) der Brennstoffzelle (2) ist.

2. Brennstoffzellensystem nach Anspruch 1,
**dadurch gekennzeichnet, dass**
der Wärmetauscher als Ladeluftkühler (16) ausgebildet ist.

3. Brennstoffzellensystem nach Anspruch 1 oder 2,
**dadurch gekennzeichnet, dass**
der Bereich mit dem katalytisch aktiven Material (22) in den Wärmetauscher (16) integriert ausgebildet ist.

4. Brennstoffzellensystem nach Anspruch 3,
**dadurch gekennzeichnet, dass**
der Wärmetauscher (16) im Bereich, in dem er vom Prozessluftstrom durchströmt ist, ganz oder teilweise mit dem katalytisch aktiven Material (22) beschichtet ist.

5. Brennstoffzellensystem nach Anspruch 1 oder 2,
**dadurch gekennzeichnet, dass**
der Bereich mit dem katalytisch aktiven Material (22) als eigenständige Komponente (23) in Strömungsrichtung vor dem Wärmetauscher (16) ausgebildet ist.

6. Brennstoffzellensystem nach einem der Ansprüche 1 bis 5,
**dadurch gekennzeichnet, dass**
der Brennstoffstrom ein Stoffstrom mit zumindest einem gewissen Anteil des Brennstoffs der Brennstoffzelle (2) ist.

7. Brennstoffzellensystem nach einem der Ansprüche 1 bis 6,
**dadurch gekennzeichnet, dass**
wenigstens ein mit einem Brennstoff aufweisenden Bereich verbundenes Leitungselement (11, 20) vor dem Wärmetauscher (16) in den zum Wärmetauscher (16) strömenden Prozessluftstrom mündet.

8. Brennstoffzellensystem nach einem der Ansprüche 1 bis 7,
**dadurch gekennzeichnet, dass**
wenigstens ein mit einem Brennstoff aufweisenden Bereich verbundenes Leitungselement (11, 20) in den Bereich des Wärmetauscher (16), in dem er von dem Prozessluftstrom durchströmt ist, mündet.

9. Verwendung des Brennstoffzellensystems nach einem der Ansprüche 1 bis 8, zur Bereitstellung von elektrischer Leistung in einem Transportmittel.

10. Verwendung nach Anspruch 9,
**dadurch gekennzeichnet, dass**
die elektrische Leistung zum Antrieb des Transportmittels genutzt wird, wobei das Transportmittel als Fahrzeug, insbesondere als schienenloses Landfahrzeug, ausgebildet ist.

## Claims

1. Fuel cell system (1), comprising at least one fuel cell (2), at least one air delivery device (6) delivering a process air stream to the fuel cell (2) and at least one heat exchanger (16), through which the process air stream flows downstream of the air delivery device (6) on the one side and a cooling medium stream flows on the other side, wherein a region with a catalytically active material (22) is located upstream of or in the region of the heat exchanger (16) in the direction of flow of the process air stream, wherein a fuel can be supplied to the region with the catalytically active material (22),
**characterised in that**
the cooling medium stream is an exhaust air stream from a cathode region (3) of the fuel cell (2).

2. Fuel cell system according to claim 1,
**characterised in that**
the heat exchanger is designed as an intercooler (16).

3. Fuel cell system according to claim 1 or 2,
**characterised in that**
the region with the catalytically active material (22) is integrated into the heat exchanger (16).

4. Fuel cell system according to claim 3,
**characterised in that**
the heat exchanger (16) is completely or partially coated with the catalytically active material (22) in the region through which the process air stream flows.

5. Fuel cell system according to claim 1 or 2,
**characterised in that**
the region with the catalytically active material (22) is designed as an independent component (23) located upstream of the heat exchanger (16) in the direction of flow.

6. Fuel cell system according to any of claims 1 to 5,
**characterised in that**
the fuel stream is a material stream with a certain proportion of the fuel of the fuel cell (2).

7. Fuel cell system according to any of claims 1 to 6,
**characterised in that**
at least one line element (11, 20) connected to a region carrying fuel terminates into the process air stream flowing to the heat exchanger (16) upstream of the heat exchanger (16).

8. Fuel cell system according to any of claims 1 to 7,
**characterised in that**
at least one line element (11, 20) connected to a region carrying fuel terminates into the region of the heat exchanger (16) through which the process air stream flows.

9. Application of the fuel cell system according to any of claims 1 to 8 for the provision of electric power in a means of transport.

10. Application according to claim 9,
**characterised in that**
the electric power is used for driving the means of transport, the means of transport being designed as a vehicle, in particular as a trackless ground vehicle.

## Revendications

1. Système (1) de piles à combustibles comprenant au moins une pile à combustible (2), au moins un dispositif (6) d'amenée d'air, qui amène un flux d'air de traitement à la pile à combustible (2), au moins un échangeur thermique (16) qui est traversé d'un côté par le flux d'air de traitement en aval du dispositif (6) d'amenée d'air et de l'autre côté par le flux de liquide de refroidissement, il est prévu dans la direction d'écoulement du flux d'air de traitement en amont de l'échangeur thermique (16) ou dans la zone de celui-ci une zone comportant un matériau (22) à activité catalytique, ladite zone comportant un matériau (22) à activité catalytique pouvant recevoir un combustible, **caractérisé en ce que** le flux de liquide de refroidissement est un flux d'air sortant provenant d'une zone cathodique (3) de la pile à combustible (2).

2. Système de piles à combustible selon la revendication 1, **caractérisé en ce que** l'échangeur thermique est conçu en tant que refroidisseur d'air de suralimentation (16).

3. Système de piles à combustible selon la revendication 1 ou la revendication 2, **caractérisé en ce que** la zone comportant le matériau (22) à activité catalytique est conçu en une seule pièce avec l'échangeur thermique (16).

4. Système de piles à combustible selon la revendication 3, **caractérisé en ce que** l'échangeur thermique (16) est revêtu dans la zone dans laquelle il est traversé par le flux d'air de traitement, entièrement ou en partie par le matériau (22) à activité catalytique.

5. Système de piles à combustible selon la revendication 1 ou la revendication 2, **caractérisé en ce que** la zone comportant le matériau (22) à activité catalytique est conçu comme un composant (23) autonome dans la direction d'écoulement en amont de l'échangeur thermique (16).

6. Système de piles à combustible selon l'une quelconque des revendications 1 à 5, **caractérisé en ce que** le flux de combustible est un flux de matière comprenant au moins une certaine proportion de combustible de la pile à combustible (2).

7. Système de piles à combustible selon l'une quelconque des revendications 1 à 6, **caractérisé en ce qu'**au moins un élément de conduite (11, 20) relié à une zone présentant un combustible en amont de l'échangeur thermique (16) débouche dans le flux d'air de traitement s'écoulement en direction de l'échangeur thermique (16).

8. Système de piles à combustible selon l'une quelconque des revendications 1 à 7, **caractérisé en ce qu'**au moins un élément de conduite (11, 20) relié à une zone présentant un combustible, dans lequel il est traversé par le flux d'air de traitement, débouche dans la zone de l'échangeur thermique (16).

9. Utilisation du système de piles à combustibles selon l'une quelconque des revendications 1 à 8, destiné à fournir une énergie électrique dans un moyen de transport.

10. Utilisation selon la revendication 9, **caractérisée en ce que** l'énergie électrique est destinée à l'entraînement du moyen de transport, le moyen de transport étant conçu en tant que véhicule automobile, en particulier comme véhicule terrestre sans rail.
